# FASCICULE DE BREVET EUROPEEN

(11) **EP 1 750 898 B1**
(45) Date de publication et mention de la délivrance du brevet: **14.01.2009**
(21) Numéro de dépôt: 05766632.3
(22) Date de dépôt: 27.05.2005
(51) Int. Cl.: B23P 19/00

(54) **DISPOSITIF AUTORISANT LE DEPLACEMENT DE PIECES A L'INTERIEUR D'UNE CONDUITE**
VORRICHTUNG ZUM VERSCHIEBEN VON TEILEN IN EINER LEITUNG
DEVICE FOR ENABLING THE DISPLACEMENT OF PARTS INSIDE A CONDUIT

(30) Priorité: 27.05.2004 FR 0405699
(43) Date de publication de la demande: 14.02.2007
(73) Titulaire: F2 C2 System, 31130 Flourens (FR); ERIS, 31130 Flourens (FR)
(72) Inventeur: AURIOL, Jean-Marc, F-31130 Flourens (FR); BORNES, Philippe, F-31130 Flourens (FR)
(74) Mandataire: Thurgood, Alexander John
(86) Numéro de dépôt international: PCT/FR2005/050383
(87) Numéro de publication internationale: WO 2005/118216

(56) Documents cités:
- DE-C- 4 219 190
- DE-U- 29 914 956
- PATENT ABSTRACTS OF JAPAN vol. 009, no. 168 (M-396), 13 juillet 1985 (1985-07-13) & JP 60 040320 A (MATSUSHITA DENKI SANGYO KK), 2 mars 1985 (1985-03-02)

## Description

### DOMAINE D'APPLICATION DE L'INVENTION

La présente invention concerne un dispositif de déplacement de pièces pas mise en mouvement d'un fluide, et a trait en particulier au domaine du stockage et de la distribution de pièces de petite quincaillerie tels les rivets à l'intérieur d'une conduite et aux adaptations permettant de réaliser leur déplacement dans les meilleures conditions.

### DESCRIPTION DE L'ART ANTÉRIEUR

Le stockage et la distribution de pièce de pentite quincaillerie sont réalisés dans l'art antérieur par plusieurs types de dispositifs parmi lesquels les dispositifs de stockage et de distribution d'éléments de fixation tels les rivets, qui se composent d'un ou plusieurs tubes à l'intérieur desquels peuvent circuler grâce ou non à l'action d'un fluide, les rivets.

Ce type de dispositif présente de nombreux avantages parmi lesquels :
- les pièces stockées sont protégées des chocs évitant les détériorations éventuelles de géométrie ou d'état de surface,
- le tube rainuré permet au fluide de mise en mouvement, c'est à dire le plus souvent l'air comprimé, d'arriver à la première pièce et de la mettre en mouvement avec très peu de pression,
- les pièces sont stockées pré-orientées dans le tube,
- les temps d'attente et de réorientation des pièces sont éliminés,
- l'encombrement et la masse d'un tel moyen de stockage et de distribution sont moins importants que celui d'un dispositif de type bol vibrant.

Il est néanmoins difficile d'assurer grâce à un tel dispositif le stockage et la distribution de pièces qui ne présentant pas de surfaces d'appui au flux de fluide et de surfaces de guidage susceptibles de coopérer avec l'âme creuse du tube.

En effet, en l'absence de surface sensiblement plane et perpendiculaire à l'axe du tube, la pièce aura des difficultés à se mouvoir à l'intérieur du tube sous l'action du fluide sous pression. Elle rencontrera des difficultés également si elle ne propose pas de surface de guidage pour empêcher son coincement à l'intérieur du tube. Le docment DE 42 19 190 C1 décrit un dispositif de déplacement de pièces conforme au préambule de la revendication 1.

### BRÈVE DESCRIPTION DE L'INVENTION

Les demandeurs ont mené des recherches visant à proposer un dispositif susceptible d'autoriser le stockage et la distribution de pièces quelconques à l'intérieur de tubes dans lequel circule un fluide de mise en mouvement malgré leur manque de surface d'appui audit fluide et malgré l'absence éventuelle de surface de guidage.

Ces difficultés techniques sont solutionnées par le dispositif de la revendication 1

Ce dispositif permet à une pièce quelconque de petite quincaillerie de bénéficier des avantages d'un moyen de stockage et de distribution qui lui étaient jusqu'ici interdits, grâce à l'association de chaque pièce à un corps gui adopte les surfaces fonctionnelles nécessaires, par exemple, au stockage et à la distribution à partir d'une conduite. Ainsi, quels que soient le profil et le volume des pièces à stocker et à distribuer, le corps autorise cette fonction car il regroupe les caractéristiques nécessaires à cette fonction à savoir des surfaces de guidage et des surfaces d'appui, pour le fluide de mise en mouvement. Ce corps sert également d'intercalaire entre deux pièces à l'intérieur de la conduite.

Ces permettent aussi d'envisager le déplacement de pièces ne présentant pas de surface susceptible de fournir un appui au fluide de déplacement.

En effet, en formant un ensemble cinématique indépendant, le corps et la pièce présentent toutes les caractéristiques nécessaires à un bon déplacement en proposant une surface d'appui au fluide et en évitant le chevauchement des pièces entre elles.

L'association d'un corps pour chaque pièce induit de préférence une opération de liaison entre les deux avant leur insertion à l'intérieur de la conduite. Ainsi, une opération de fixation ou d'association entre une pièce et un dispositif peut être réalisée préalablement à leur insertion dans la conduite.

La liaison d'un corps avec chaque pièce permet de garder la pièce centrée par rapport au chemin de glissement défini par la conduite.

Selon une autre caractéristique particulièrement avantageuse de l'invention, la préformation est réalisée dans le corps à des fins d'accueil et de liaison avec la pièce à déplacer de façon à obtenir un ajustement serré entre la pièce et le dispositif.

Un autre objet de l'invention est constitué par l'optimisation de la capacité des corps du dispositif à offrir la plus grande surface possible susceptible d'être soumise à l'action d'un fluide de déplacement.

Pour ce faire, les demandeurs ont avantageusement imaginé un dispositif remarquable en ce que le corps présente au moins un changement de section sur sa périphérie créant ainsi un épaulement dont la surface est susceptible d'être soumise à la pression du fluide de déplacement. Ainsi, le corps du dispositif adopte un ou plusieurs épaulements ou rebords extérieurs susceptibles d'augmenter la surface du dispositif soumise à la pression du fluide de déplacement.

Les concepts fondamentaux de l'invention viennent d'être exposés ci-dessus dans leur forme la plus élémentaire. D'autres détails et d'autres caractéristiques ressortiront plus clairement à la lecture de la description qui suit en regard des dessins annexés, donnant à titre d'exemple non limitatif, plusieurs modes de réalisation d'un dispositif conforme à l'invention.

### DRÈVE DESCRIPTION DES DESSINS

La figure 1 est un dessin schématique de détail en coupe d'un corps non conforme à l'invention,
la figure la est un dessin schématique en vue en coupe d'une conduite dans laquelle circulent le corps et la pièce illustrés en figure 1,
La figure 2 est un dessin schématique de détail en coupe d'un corps d'un mode de réalisation d'un dispositif conforme à l'invention avant son association avec une pièce à déplacer,
La figure 2a est un dessin schématique en vue de côté en coupe d'une conduite dans laquelle circulent le corps et la pièce illustrés à la figure 2,
La figure 3 est un dessin schématique de détail en coupe d'un autre corps non conforme à l'invention avant son association avec une pièce à déplacer,
La figure 3a est un dessin schématique en vue de côté en coupe d'une conduite dans laquelle circulent le corps et la pièce illustrés à la figure 3,
La figure 4 est un dessin schématique de détail en coupe d'un corps d'un autre mode de réalisation d'un dispositif conforme à l'invention avant son association avec une pièce à déplacer,
La figure 4a est un dessin schématique en vue de côté en coupe d'une conduite dans laquelle circulent le corps et la pièce illustrés à la figure 4,
La figure 5 est un dessin schématique de détail en coupe d'un autre corps non conforme à l'invention,
La figure 5a est un dessin schématique en vue de côté en coupe d'une conduite dans laquelle circulent le corps et la pièce illustrés à la figure 5,
La figure 6 est un dessin schématique de détail en coupe d'un corps d'un autre mode de réalisation d'un dispositif conforme à l'invention avant son association avec une pièce à déplacer,
La figure 6a est un dessin schématique en vue de côté en coupe d'une conduite dans laquelle circulent le corps et la pièce illustrés à la figure 6.

### DESCRIPTION DES MODES DE RÉALISATION PRÉFÉRÉS

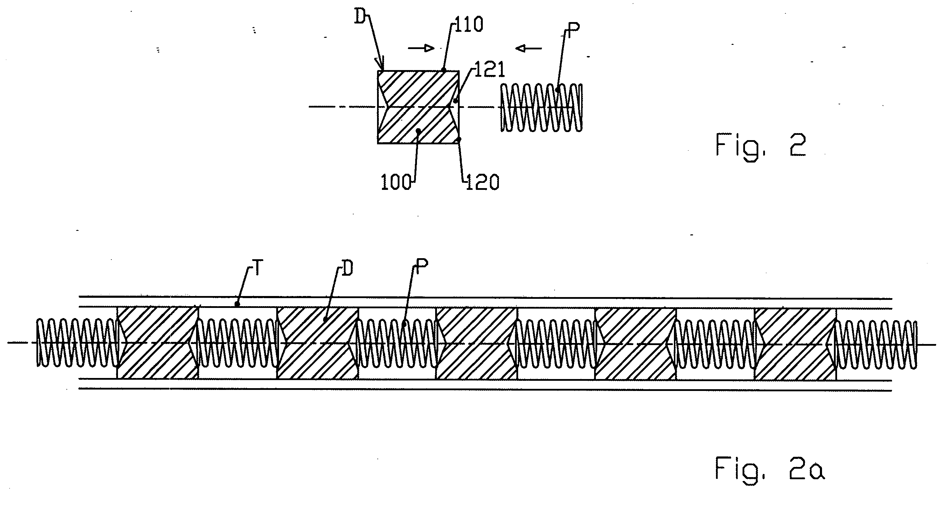

Comme illustré sur les dessins des figures 2 et 2a, la pièce P devant être stockée et distribuée est un ressort de compression qui, bien que possédant une forme cylindrique, ne possède pas de surfaces planes suffisantes à l'action efficace d'un fluide de transport pour permettre son déplacement à l'intérieur d'une conduite ici constituée par un tube T. conformément à l'invention, pour solutionner cette difficulté et faire profiter des pièces tels les ressorts, des avantages non seulement du mode de stockage et de distribution par tube mais également du déplacement au moyen d'un fluide, les demandeurs ont conçu un dispositif D à associer à chaque pièce P à stocker et à déplacer.

Ainsi, dans ce mode de réalisation le dispositif D a pour fonction d'offrir une surface d'appui au fluide de mise en mouvement (constitué ici par la base du cylindre formé par le corps 100 du dispositif) et d'éviter le chevauchement entre les pièces P en servant d'intercalaire.

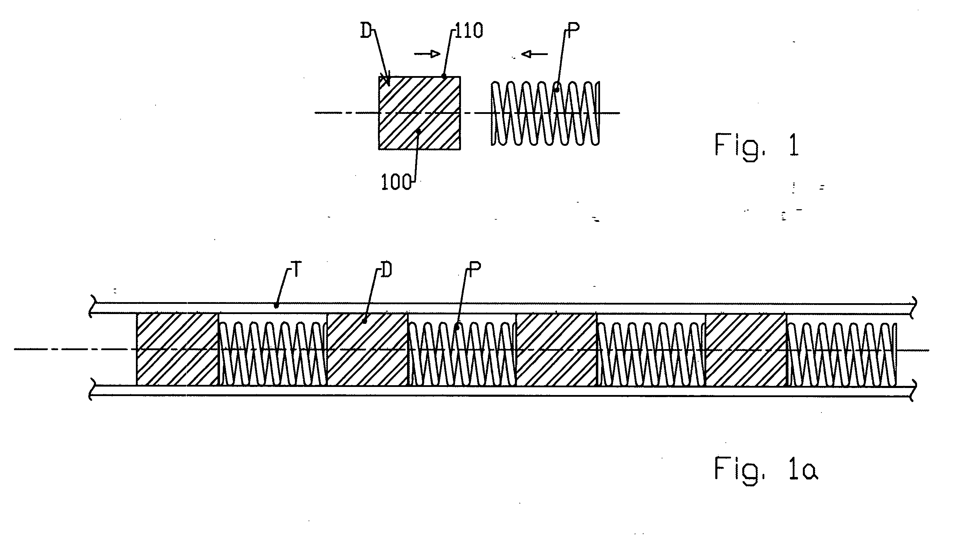

Selon ce mode de réalisation, les extrémités du corps 100 du dispositif D sont préformées pour centrer le ressort avec l'axe du tube dans lequel ils doivent circuler, contrairement au dispositif, non conforme à l'invention des figures 1 et 1a, dans lequel les ressorts P reposent sur le fond de la conduite T. Le dispositif assure alors les fonctions de surface d'appui au fluide de mise en mouvement, de surface de guidage et d'intercalaire. Ce dispositif D est remarquable en ce qu'il est constitué d'un corps 100 dont au moins une partie de la périphérie 110 vient en contact avec la surface intérieure 200 de la conduite T dans laquelle doivent se déplacer les pièces P et dont les extrémités 120 sont préformées pour accueillir les extrémités des pièces P à déplacer.

Selon le mode de réalisation illustré, le corps 100 du dispositif D comprend au niveau de son extrémité 120, une zone en retrait 121 qui accueille l'extrémité de la pièce P qui est ici un ressort de compression.

Comme illustrée, la zone en retrait 121 est centrée par rapport à l'axe du dispositif D pour que le ressort ne vienne pas en contact avec la surface intérieure 200 de la conduite T évitant ainsi le frottement. Ainsi selon l'invention, le dispositif accueille la pièce P pour la centrer par rapport à l'axe de la conduite et éviter dans la mesure du possible son contact avec la surface intérieure de la conduite.

Selon le mode de réalisation illustré, la conduite T comprend une âme creuse à section circulaire. En conséquence, dans ce mode de réalisation le dispositif D comprend une surface extérieure 110 qui reprend en totalité ce profil et dont les dimensions autorisent le glissement du dispositif à l'intérieur de la conduite. Néanmoins, la section de la conduite peut adopter tout profil (polygonal, oblong, etc...) auquel s'adapte la surface extérieure 110 du dispositif D.

Les modes de réalisation décrits ci-dessous illustrent une application aux rivets aveugles.

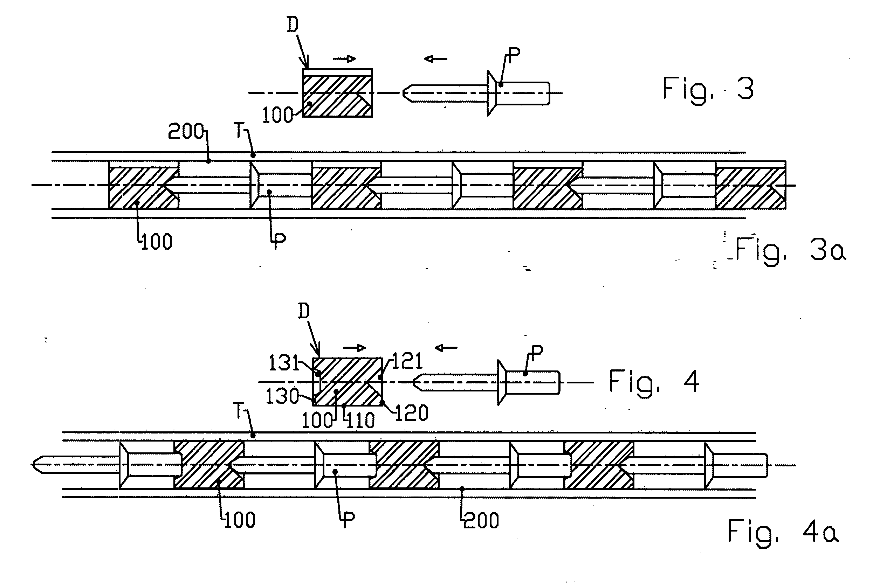

Tel qu'illustré sur les dessins des figures 4 et 4a, le corps 100 du dispositif D est préformé à une extrémité 120 de façon à ce qu'il puisse centrer l'extrémité d'un rivet aveugle P avec lequel il est en liaison de façon à maintenir ce dernier dans une position coaxiale avec le tube ou conduite T.

selon un mode de réalisation non illustré, cette préformation consiste en un trou cylindrique coaxial à l'axe du cylindre formé par le dispositif D d'un diamètre adapté pour accueillir l'extrémité fine du rivet aveugle P. Ainsi, à chaque rivet P à distribuer est associé un dispositif intercalaire D, chaque association devenant un sous-ensemble cinématique indépendant se mouvant en même temps à l'intérieur du tube T notamment lorsque le rivet P est monté serré dans le dispositif D.

Selon l'invention et comme illustré par les dessins des figures 4 et 4a, le dispositif D est également préformé à sa deuxième extrémité 130, pour accueillir et pour centrer la deuxième pièce et ici, le deuxième rivet P avec lequel il est en contact de par sa fonction d'intercalaire. Cette deuxième préformation 131 est légèrement différente dans cette application destinée aux rivets aveugles de par la dissymétrie inhérente à leur fonction. Ainsi, selon le mode de réalisation illustré, la préformation 131 adoptée par la deuxième extrémité 130 du corps 100 du dispositif D est constituée par une forme évidée tronconique en retrait.

Le centrage ou l'optimisation du positionnement des extrémités des rivets P disposés de part et d'autre des dispositifs intercalaires D garantit un bon positionnement desdits rivets et donc facilite leur déplacement. Néanmoins, lorsqu'un montage serré est prévu, le dispositif D ne se fixe qu'à une seule pièce P. En effet, la liaison entre la deuxième extrémité 130 du dispositif et la deuxième extrémité de la pièce P n'est active que lorsque ces extrémités viennent en contact. Les sous-ensembles cinématiques formés par l'association d'un dispositif avec une pièce ne sont pas cinématiquement liés bien que le mouvement transversal imprimé à un sous-ensemble peut, grâce aux dispositifs, être imprimé aux autres.

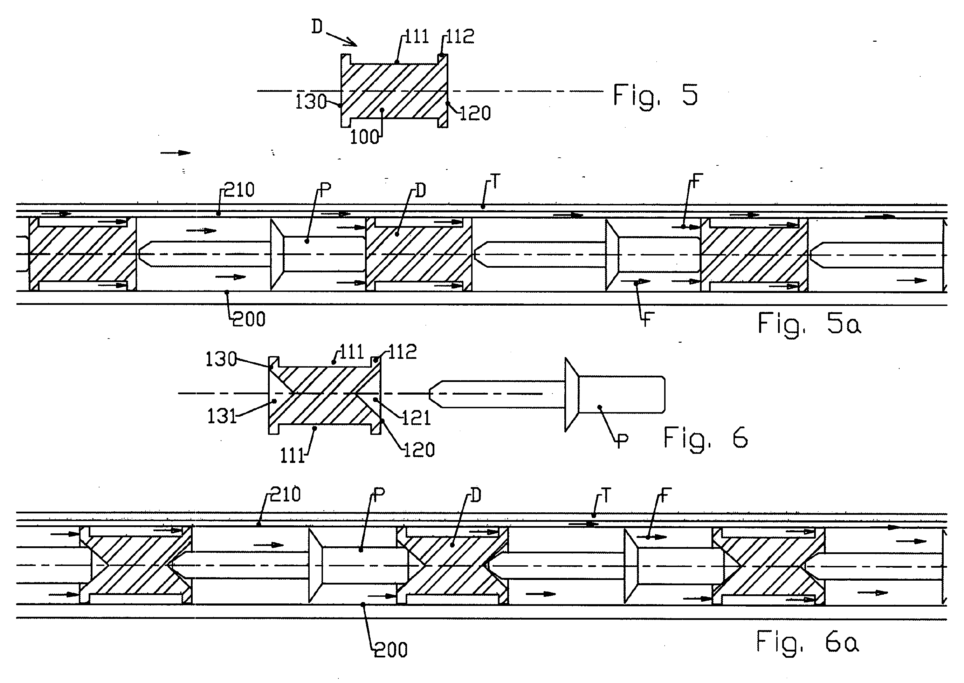

Afin d'optimiser l'effet du fluide sous pression (par exemple de l'air comprimé) sur les dispositifs D, les demandeurs ont avantageusement imaginé un dispositif D tel celui représenté aux figures 6 et 6a. Ce dispositif est particulièrement judicieux en ce qu'il comprend sur sa surface extérieure 110 au moins, un changement de section 111 pour former un épaulement 112 augmentant ainsi la surface du dispositif D soumise à la pression du fluide de déplacement symbolisé par les flèches F. Cet épaulement 112 est d'autant plus utile que le dispositif peut être utilisé dans un tube T dont l'âme creuse ou surface intérieure 200 est rainurée tel celui illustré en figure 5a, rainure 210 qui facilite le passage de l'air sous pression (flèche F) jusqu'à l'épaulement 112. Bien entendu, le nombre d'épaulements peut être supérieur.

Une autre solution permettant de faciliter le déplacement du fluide de mise en mouvement à travers la totalité de la conduite afin de pouvoir agir sur la totalité des dispositifs D et donc des pièces peut être mise en oeuvre par une caractéristique particulièrement avantageuse illustrée en figures 3 et 3a, avec un corps présentant des évidements le traversant longitudinalement afin que le fluide de mise en mouvement circulant à l'intérieur de la conduite puisse le traverser. Ces évidements peuvent se présenter comme illustré, sous la forme d'une ou plusieurs rainures longitudinales droites ou non ménagées sur la surface périphérique 110 du corps 100 ou bien par des orifices traversant longitudinalement le corps. Cette caractéristique évite, en l'absence de rainures réalisées dans l'âme creuse de la conduite T, que le corps 100 ne devienne un trop grand obstacle au déplacement du fluide et donc des pièces.

Le mode de réalisation du dispositif D illustré par les figures 6 et 6a reprend l'ensemble des caractéristiques conçues, avec des corps 100 qui adoptent :
- une forme extérieure 110 adaptée au profil interne de la conduite T dans lequel il est prévu qu'il se déplace et avec la surface interne 200 duquel il est en contact,
- une première extrémité 120 préformée pour accueillir et centrer une première extrémité d'une pièce P à stocker et à distribuer tel un rivet,
- une deuxième extrémité 130 préformée pour accueillir et centrer, la deuxième extrémité d'une autre pièce P à stocker et à distribuer,
- un ou plusieurs épaulements 112 ou rebords extérieurs susceptibles d'augmenter la surface soumise à la pression du fluide de déplacement.

Comme illustrées, dans ce mode de réalisation, les extrémités 120 et 130 du corps 100 du dispositif D adoptent la même préformation.

On comprend que le dispositif qui vient d'être ci-dessus décrit et représenté, l'a été en vue d'une divulgation plutôt que d'une limitation. Bien entendu, divers aménagements, modifications et améliorations pourront être apportés aux exemples ci-dessus décrits, sans pour autant sortir du cadre de l'invention telle que définie dans les revendications.

## Revendications

1. Dispositif (D) de déplacement de pièces (P) par mise en mouvement d'un fluide, comprenant une conduite (T) à l'intérieur de laquelle circule le fluide de mise en mouvement et une pluralité de corps (100) présentant chacun:
- une périphérie (110) dont une partie au moins est en contact avec la surface intérieure (200) de la conduite (T), dans laquelle doivent se déplacer les pièces (P), à des fins de guidage;
- une surface sensiblement perpendiculaire à l'axe de déplacement à l'intérieur de la conduite (T) à des fins d'appui pour le fluide de déplacement; et
- une première extrémité (120) préformée pour accueillir une extrémité d'une pièce (P) à déplacer;
**caractérisé par le fait que** la deuxième extrémité (130) des corps (100) est également préformée pour accueillir et pour centrer une extrémité d'une pièce (P) avec laquelle il est en contact dans la conduite (T), de telle façon que chaque pièce (P) est centrée entre la première extrémité d'un premier corps et la deuxième extrémité d'un deuxième corps lors de son déplacement à l'intérieur de la conduite (T).

2. Dispositif (D) selon la revendication 1, **caractérisé par le fait que** les corps (100) adoptent
- une forme extérieure (110) adaptée au profil interne de la conduite (T) avec la surface interne de laquelle ils sont en contact,
- un ou plusieurs épaulements (112) ou rebords extérieurs susceptibles d'augmenter la surface soumise à la pression du fluide de déplacement.

3. Dispositif (D) selon la revendication 1, **caractérisé par le fait que** les corps (100) présentent des évidements les traversant longitudinalement afin que le fluide de mise en mouvement circulant à l'intérieur de la conduite (T) puisse les traverse.

4. Dispositif (D) selon la revendication 1, **caractérisé par le fait que** les extrémités (120, 130) des corps (100) adoptent la même préformation.

## Claims

1. A device (D) for displacement of parts (P) through actuating a fluid, comprising a conduit (T) in the interior of which circulates the actuation fluid and a plurality of the body (100) having each :
- a periphery (110) of which at least a part is in contact for guiding with the interior surface (200) of the conduit (T) in which the parts (P) must move ;
- a surface approximately perpendicular to the axis of displacement in the interior of the conduit (T) for the purpose of abutment for the displacement fluid ; and
- a first end (120) preformed to receive an end of a part (P) to be displaced ;
**characterized by** the fact that the second end (130) of the bodies (100) is also preformed to receive and to center an end of a part (P) with which it is in contact in the conduit (T) so that each part is centered between the first end of a first body and the second end of a second body when it moves in the interior of the conduit (T).

2. A device (D) according to claim 1, **characterized by** the fact that the bodies (100) adopt :
- an exterior shape (110) adapted to the inner profile of the conduit (T) with the inner surface with which it is in contact,
- one or several shoulders (112) or exterior edges capable of augmenting the surface subject to pressure from the displacement fluid.

3. A device (D) according to claim 1, **characterized by** the fact that the bodies (100) have recesses traversing them longitudinally in order that the actuation fluid circulating in the interior of the conduit (T) is able to traverse them.

4. A device (D) according to claim 1, **characterized by** the fact that the ends (120 and 130) of the bodies (100) adopt the same preformation.

## Patentansprüche

1. Vorrichtung (D) zum Verschieben von Teilen (P) durch Inbewegungsetzen eines Fluids, umfassend eine Leitung (T), in deren Innerem ein Antriebsfluid und eine Vielzahl von Körpern (100) zirkulieren, die jeweils Folgendes aufweisen:
- einen Randbereich (110), von dem zumindest ein Teil mit der Innenfläche (200) der Leitung (T) in Berührung ist, in der die Teile (P) zu verschieben sind, und der zur Führung dient;
- eine Oberfläche, die im Wesentlichen senkrecht zur Verschiebungsachse im Inneren der Leitung (T) verläuft und die für das Verschiebungsfluid als Auflage dient; und
- ein erstes Ende (120), das vorgeformt ist, um ein Ende eines zu verschiebenden Teils (P) aufzunehmen;
**dadurch gekennzeichnet, dass** das zweite Ende (130) der Körper (100) ebenfalls vorgeformt ist, um ein Ende eines Teils (P), mit dem er in der Leitung (T) in Berührung ist, aufzunehmen und zu zentrieren, und zwar so, dass jeder Teil (P) zwischen dem ersten Ende eines ersten Körpers und dem zweiten Ende eines zweiten Körpers bei seiner Verschiebung im Inneren der Leitung (T) zentriert ist.

2. Vorrichtung (D) nach Anspruch 1, **dadurch gekennzeichnet, dass** die Körper (100) Folgendes annehmen:
- eine Außenform (110), die an das Innenprofil der Leitung (T) angepasst ist, mit deren Innenfläche sie in Berührung sind,
- einen oder mehrere äußere Vorsprünge (112) oder Ränder, die imstande sind, die Oberfläche zu vergrößern, die dem Druck des Verschiebungsfluids ausgesetzt ist.

3. Vorrichtung (D) nach Anspruch 1, **dadurch gekennzeichnet, dass** die Körper (100) Aussparungen aufweisen, die sie der Länge nach durchlaufen, damit das Antriebsfluid, das im Inneren der Leitung (T) zirkuliert, sie durchströmen kann.

4. Vorrichtung (D) nach Anspruch 1, **dadurch gekennzeichnet, dass** die Enden (120, 130) der Körper (100) die gleiche Vorformung annehmen.
